Europäisches Patentamt

European Patent Office

Office européen des brevets

(11) Numéro de publication: **0 045 252**
A2

# (12) DEMANDE DE BREVET EUROPEEN

(21) Numéro de dépôt: 81401180.5

(22) Date de dépôt: 23.07.81

(51) Int. Cl.³: **H 04 N 1/18,** H 04 N 1/40

(30) Priorité: 24.07.80 FR 8016369

(43) Date de publication de la demande: 03.02.82
Bulletin 82/5

(84) Etats contractants désignés: **BE DE GB IT NL**

(71) Demandeur: **MATRA, 4 rue de Presbourg, F-75116 Paris (FR)**

(72) Inventeur: **Robbe, Michel, 36bis, rue du Maréchal Maunoury, 78700 Conflans (FR)**
Inventeur: **Hascoet, Joseph, 68, rue Sainte Gemme, 78860 Saint-Nom-La-Breteche (FR)**
Inventeur: **Lemoine, Maurice, 131, avenue de la Clairière, 78120 Rambouillet (FR)**

(74) Mandataire: **Michardière, Bernard, Cabinet Plasseraud 84, rue d'Amsterdam, F-75009 Paris (FR)**

(54) **Dispositif de lecture ou de restitution d'un document, en particulier pour appareil de télécopie.**

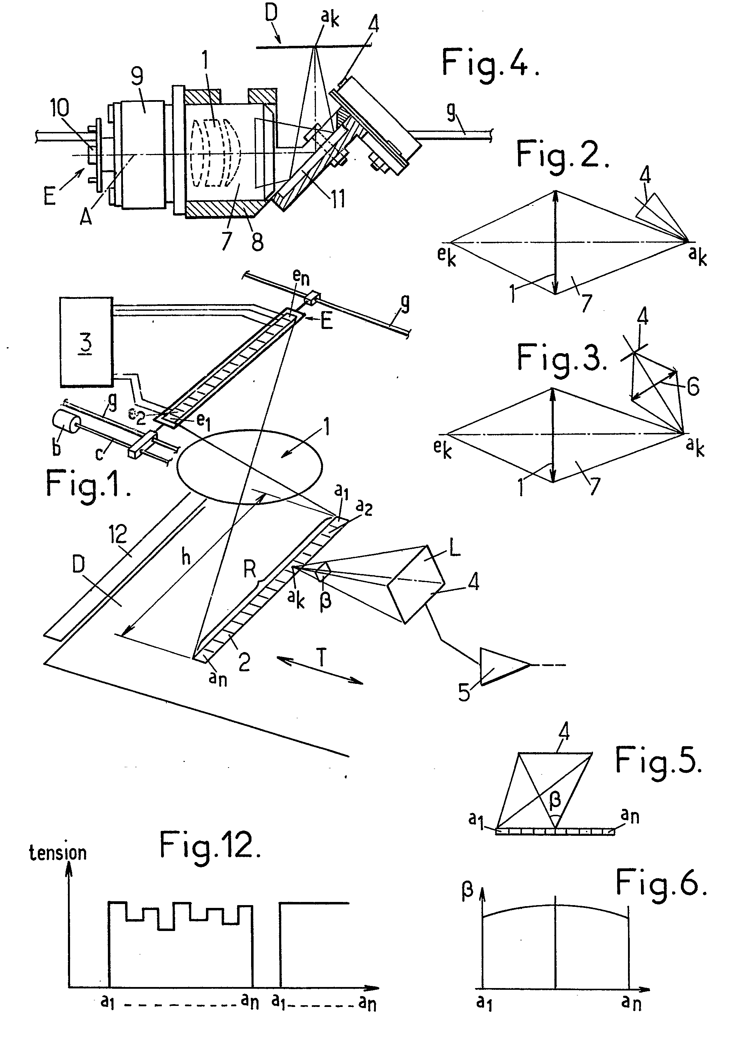

(57) Dispositif comprenant des moyens d'éclairage (E) d'une région du document, des moyens optiques (1) propres à former sur le document à lire (D) une image des moyens d'éclairage, et des moyens de lecture (L) de la région ainsi éclairée, des moyens de commande (3) en séquence étant en outre prévus pour les moyens d'éclairage de telle sorte que des zones élémentaires ($a_k$) soient éclairées successivement, les moyens de lecture (L) comprenant un seul élément détecteur (4) situé du même côté du document que les moyens d'éclairage. Le dispositif de lecture ou de restitution peut être déplacé suivant une direction transversale (T) par rapport à la direction des moyens d'éclairage (E) pour assurer le balayage d'une bande du document (D), ce document étant déplacé ensuite suivant une direction parallèle à celle des moyens d'éclairage; les susdits moyens d'éclairage (E) sont formés par une pluralité de sources lumineuses élémentaires (el . . .en) alignées, les moyens de commande en séquence étant agencés pour alimenter successivement chaque source lumineuse élémentaire, et l'élément détecteur (4) est monté sur le dispositif de lecture de manière à se déplacer avec lui. (Figure 1).

Dispositif de lecture ou de restitution d'un document, en particulier pour appareil de télécopie.

L'invention est relative à un dispositif de lecture ou de restitution d'un document, notamment d'un texte ou d'un dessin, en particulier pour appareil de télécopie, comprenant des moyens d'éclairage d'une région du document, des moyens optiques propres à former sur le document à lire une image des moyens d'éclairage, et des moyens de lecture de la région ainsi éclairée, des moyens de commande en séquence étant en outre prévus pour les moyens d'éclairage de telle sorte que des zones élémentaires soient éclairées successivement, les moyens de lecture comprenant un seul élément détecteur situé du même côté du document que les moyens d'éclairage.

On connaît déjà, d'après la demande de brevet FR. N° 2 228 337 (N° d'enregistrement national 74 15 385) un dispositif de lecture ou de restitution du genre défini précédemment. Les moyens d'éclairage sont formés par l'ensemble d'une source lumineuse qui rayonne de la lumière en permanence sur des caches commandés en séquence, comme un obturateur de lumière, pour laisser passer, momentanément, la lumière. Les caches sont disposés suivant un segment s'étendant perpendiculairement à la direction d'avance du document, et s'étendant suivant toute la largeur de ce document. Il en résulte que les moyens d'éclairage sont relativement encombrants et coûteux. En outre, seule une faible partie de l'énergie lumineuse rayonnée par la source est utilisée lorsqu'un cache est rendu momentanément translucide .

La présente invention a pour but, surtout, de remédier à ces inconvénients et de fournir un dispositif de lecture ou de restitution qui soit d'une construction simple et compacte, tout en assurant une bonne qualité de lecture ou de restitution.

Selon l'invention, un dispositif de lecture ou de restitution de documents,du genre défini précédemment, est caractérisé par le fait qu'il peut, d'une manière connue en elle-même, être déplacé suivant une direction transversale par rapport à la direction des moyens d'éclairage pour assurer le balayage d'une bande du document, ce document étant déplacé suivant une direction parallèle à celle des moyens d'éclairage, que les susdits moyens d'éclairage sont formés par une pluralité de sources lumineuses élémentaires alignées, les moyens de commande en séquence étant agencés pour alimenter successivement chaque source lumineuse élémentaire, et que l'élément détecteur est monté sur le dispositif de lecture de manière à se déplacer avec lui.

La combinaison du déplacement transversal du dispositif de lecture, connue notamment d'après la demande de brevet FR. N° 2 390 866, avec les autres caractéristiques évoquées précédemment permet d'aboutir à un ensemble compact ayant un nombre relativement réduit de sources lumineuses élémentaires, ces sources ne rayonnant de l'énergie qu'au moment où celle-ci est utilisée.

Avantageusement, les moyens optiques sont formés par un objectif dont l'axe optique est parallèle au plan du document, cet objectif étant monté sur un support propre à être déplacé suivant la direction transversale, ce support étant muni d'un miroir de renvoi situé en aval de l'objectif suivant le sens de propagation de la lumière, l'élément détecteur étant prévu, au-delà du miroir, vers l'extrémité du support la plus voisine du document.

Les moyens d'éclairage peuvent être formés par une barrette de 16 diodes électroluminescentes, tandis que les moyens optiques ont avantageusement un grandissement égal à 2.

Le dispositif de lecture ou de restitution peut comporter des moyens d'égalisation des signaux fournis par les moyens de lecture ou de restitution, pour une même couleur de référence, ces moyens d'égalisation comprenant des moyens multiplieurs du signal fourni par les moyens de lecture ou de restitution, des moyens comparateurs entre le signal ainsi multiplié et un signal de référence et des moyens d'approximation permettant de déterminer, par approximations successives, un coefficient de multiplication du signal tel que lorsque les moyens de lecture ou de restitution lisent ou restituent la couleur de référence, le signal multiplié par le coefficient approprié corresponde　au signal de référence.

Les moyens d'approximation peuvent comprendre un compteur propre à fournir successivement des valeurs croissantes du coefficient de multiplication à un multiplieur analogique digital et une mémoire vive dans　laquelle est inscrit le coefficient approprié.

Avantageusement, lors de la détermination du coef-ficient de multiplication $C_k$ pour une diode $e_k$, on éclaire successivement à vitesse nominale au moins une diode précédente $e_{k-1}$ et la diode $e_k$, de manière à atténuer un effet parasite lié à la diaphonie.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La figure 1, de ces dessins, représente schématiquement, en perspective, un dispositif de lecture conforme à l'invention.

La figure 2, est une coupe schématique d'un dispositif de lecture dans lequel l'élément détecteur reçoit directement la lumière renvoyée.

La figure 3, montre, semblablement à la figure 2, un dispositif dans lequel une optique est associée à l'élément détecteur.

La figure 4 est une vue en coupe partielle et en élévation d'un dispositif de lecture selon l'invention.

La figure 5 est un schéma illustrant la variation de l'angle solide sous lequel le détecteur est vu depuis les différentes zones successives qui sont lues.

La figure 6 illustre la variation de cet angle solide.

La figure 7 illustre un déplacement pas-à-pas du dispositif de lecture.

La figure 8 illustre l'inclinaison de l'image analysée, lorsque le dispositif de lecture est déplacé en continu.

# 0045252

La figure 9 est un schéma des moyens d'égalisation des signaux issus des capteurs.

La figure 10, reprend, sous une forme plus détaillée, le schéma de la figure 9.

La figure 11 est un schéma explicatif de l'égalisation.

La figure 12, enfin, illustre schématiquement, les signaux fournis avant égalisation et après égalisation.

En se reportant aux dessins, notamment à la figure 1, on peut voir un dispositif de lecture d'un document D, notamment d'un texte ou d'un dessin, comprenant des moyens d'éclairage E d'une région R du document, et des moyens de lecture L de la région ainsi éclairée.

Les moyens d'éclairage E sont avantageusement formés par une pluralité de sources lumineuses élémentaires e1, e2.......en disposées suivant un segment rectiligne ; de tels moyens d'éclairage E sont notamment formés par une barrette de diodes électro-luminescentes e1......en alignées.

Les moyens d'éclairage E peuvent comprendre des moyens optiques 1, formés par un objectif, destiné à projeter sur le document à lire D une image 2 des sources lumineuses. Sur les figures 1 à 3, les moyens optiques 1 ont été schématiquement représentés par une seule lentille, alors que sur la figure 4, il apparaît que l'objectif 1 se compose, en réalité, de plusieurs lentilles.

Le grandissement des moyens optiques 1 est choisi en fonction des performances souhaitées et des dimensions de la barrette de diodes électro-luminescentes formant les moyens d'éclairage E; un grandissement égal à 2 est avantageux avec une barrette de 16 diodes électro-luminescentes (DELS) pour répondre à des critères coût/technologie.

Le dispositif de lecture comprend des moyens de commande 3 en séquence des moyens d'éclairage E de telle sorte que des zones élémentaires a1, a2.... an de la région R du document soient éclairées successivement par les moyens d'éclairage e1, e2.....e$\underline{n}$. Les zones a1.....a$\underline{n}$ correspondent aux images formées par les moyens optiques 1, sur le document D, des sources e1....e$\underline{n}$.

Les moyens de commande en séquence 3 sont réalisés de manière classique et comprennent, par exemple, une horloge dont les signaux de sortie attaquent l'entrée d'un registre à décalage dont les $\underline{n}$ sorties sont reliées, en parallèle, aux $\underline{n}$ diodes électro-luminescentes e1 ..... e$\underline{n}$.

Les zones élémentaires successives a1....a$\underline{n}$ sont ainsi éclairées successivement.

Il est à noter qu'à la place d'une barrette de diodes électro-luminescentes, on pourrait utiliser d'autres sources d'éclairage telles que des barrettes de sources incandescentes etc.

Il convient de noter que le terme "éclairage" doit être compris dans un sens large et comme signifiant l'envoi sur le document D d'un flux d'énergie à partir d'une source.

Les moyens de lecture L comprennent un seul élément détecteur 4 qui peut être un détecteur au silicium, un photomultiplicateur ou autre élément détecteur analogue. Ce détecteur 4 est destiné à recevoir une partie du flux d'énergie renvoyé par la zone élémentaire telle que a1 ou a2.... ou a$\underline{n}$ éclairée, de la région R du document.

La sortie 4a du détecteur 4 est reliée à un ensemble électronique 5 de traitement des signaux fournis par ce détecteur.

Les signaux produits à la sortie 4a correspondent aux informations contenues par les zones élémentaires a1,a2....... successivement éclairées.

On a représenté, schématiquement, sur la fig. 1, l'angle solide β sous lequel le détecteur 4 est vu à partir du centre d'une zone élémentaire $a_k$. Cet angle solide β dépend de la surface du détecteur et de sa disposition. Le détecteur 4 reçoit la lumière diffusée par

la zone élémentaire $a_k$ dans cet angle solide β, et fournit un courant proportionnel à cette quantité de lumière.

Le détecteur 4 peut recevoir directement la lumière ou plus généralement l'énergie renvoyée par la zone élémentaire $a_k$, comme représenté sur les figures 1, 2 et 4.

Selon une variante, une optique, schématiquement représentée par une lentille 6 sur la fig. 3, est prévue pour collecter le flux et former une image des zones élémentaires $a_1 \ldots\ldots a_n$ sur le détecteur. Le détecteur doit avoir au moins une dimension telle que toute l'image des n zones élémentaires $a_1 \ldots\ldots a_n$ à travers l'optique 6 se forme sur ledit détecteur.

Le détecteur 4 est disposé hors du faisceau réfléchi par le document D (réflexion spéculaire) et hors du faisceau 7 (fig. 2 et 3) qui émerge des moyens optiques 1.

Le dispositif de lecture peut être déplacé suivant une direction T transversale par rapport à la direction d'alignement des sources lumineuses $e_1$, $e_2 \ldots e_n$, pour assurer le balayage d'une bande du document D ayant une largeur h égale à la longueur de l'image de la barrette de diodes électroluminescentes. Le document D, après chaque balayage, est déplacé d'un pas égal à h suivant une direction parallèle à celle des moyens d'éclairage E, c'est-à-dire une direction parallèle à la direction d'alignement des sources élémentaires $e_1 \ldots e_n$ ; généralement la direction de déplacement du document D est orthogonale à la direction T. On a schématiquement représenté, sur la Fig. 1 le montage coulissant du dispositif de lecture sur deux rails de guidage g parallèles à T ; l'entraînement du dispositif de lecture sur les rails g est assuré par un moteur électrique b actionnant un dispositif c propre à transformer un mouvement de rotation en mouvement rectiligne ; le dispositif c peut, par exemple, être formé par une vis entraînée en rotation par le moteur, immobilisée suivant la direction axiale et parallèle à T ; cette vis coopére avec un écrou fixé sur le dispositif de lecture . Selon une variante, on pourrait utiliser un entraînement par courroie sans fin.

En se reportant à la figure 4, on peut voir un mode de réalisation pratique d'un dispositif de lecture dans lequel les moyens optiques 1, formés par un objectif à plusieurs lentilles, sont disposés à l'intérieur d'un tube 7 dont l'axe géométrique A est confondu avec l'axe optique de l'objectif 1. Cet axe A est parallèle au plan du document D. Le tube 7 est monté dans un support 8 qui peut être déplacé suivant une direction transversale par rapport à la direction de l'image de la barrette de diodes électro-luminescentes projetée sur le document D, afin de réaliser le balayage de ce document. Le tube 7 est solidaire à sa partie amont, suivant le sens de propagation de la lumière, d'un support 9 pour la barrette 10 de diodes électro-luminescentes.

Le support 8 est agencé, en aval de l'objectif 1, de manière à supporter un miroir de renvoi 11 incliné à 45° par rapport à l'axe A et par rapport à une direction orthogonale au document D.

L'élément détecteur 4 est prévu au-delà du miroir 11, vers l'extrémité du support 8 la plus voisine du document D.

La face du document D qui doit être lue est tournée vers le miroir 11 ; selon la représentation de la figure 4 le document D est placé horizontalement, avec la face qui doit être lue tournée vers le bas.

Les déplacements du dispositif de lecture peuvent être commandés pas-à-pas.

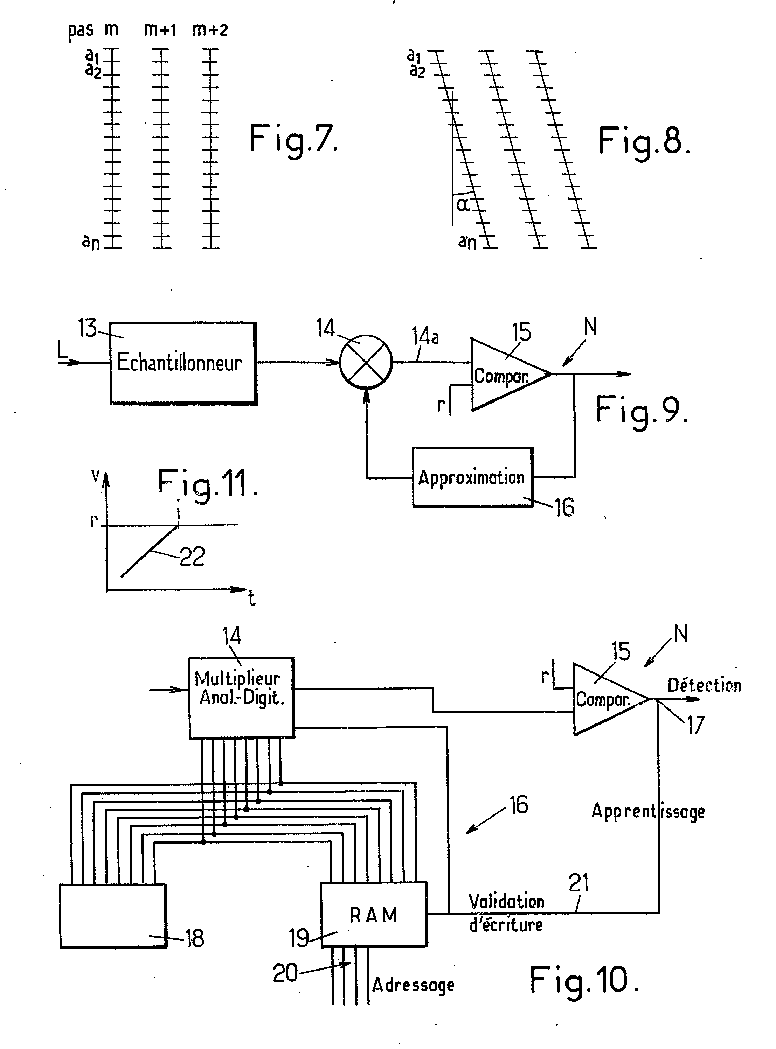

La figure 7 illustre, schématiquement, les positions successives des diverses zones élémentaires a1... an lors du déplacement. Le dispositif de lecture s'arrête à chaque pas m, m + 1... pour l'exploration successive des n éléments e1.... en des moyens d'éclairage.

Pour chaque pas, la séquence de l'analyse des n éléments e1...en peut se faire dans le même sens, par exemple de haut en bas selon la représentation de la figure 7.

Selon une variante, la séquence pour le pas m peut s'effectuer de haut en bas, c'est-à-dire de l'élément e1 vers l'élément en et pour le pas suivant m + 1, la séquence s'effectue en sens inverse de l'élément en vers l'élément e1 c'est-à-dire de bas en haut. Au pas m + 2 suivant, on retrouve la séquence de haut en bas du pas m.

Selon une autre possibilité, le dispositif de lecture est déplacé en continu, pendant le balayage. Il en résulte que si la barrette d'éléments e1.....en est disposée perpendiculairement à la direction T (fig.1) de balayage, les zones élémentaires a1.....an, correspondant aux images des éléments e1.....en seront analysées suivant une direction oblique par rapport à la direction T, comme représenté sur la figure 8.

En effet, le dispositif de lecture se déplaçant en continu, l'élément en, au moment où il sera alimenté, se sera déplacé par rapport à la position qu'il occupait au moment où l'élément e1 était alimenté. L'amplitude de ce déplacement est égal à la vitesse de déplacement du dispositif de lecture multipliée par le temps séparant le moment où l'élément en est alimenté du moment où l'élément e1 est alimenté.

On tient compte, à la restitution, de cette obliquité de l'image analysée, pour réaliser un redressement.

Il est à noter qu'un redressement de l'image analysée peut être obtenu par inclinaison de la barrette 10 de diodes électro-luminescentes e1...... en suivant un sens contraire à celui de l'inclinaison provoquée par le déplacement continu du dispositif de lecture.

Une telle disposition implique que la vitesse de balayage des éléments e1.....en et la vitesse de déplacement du dispositif de lecture suivant la direction T soient coordonnées avec l'angle d'inclinaison de la barrette 10.

Il est à noter que l'oeil humain est très sensible au moindre défaut répétitif sur un document examiné.

9 0045252

Compte tenu des vitesses de déplacement et de balayage, l'inclinaison pratique de la barrette de diodes électro-luminescentes par rapport à la direction orthogonale à T (cette inclinaison est en quelque sorte représentée par l'angle α sur la figure 8) est relativement faible, de l'ordre de 1° par exemple. Toutefois, en l'absence d'une telle inclinaison et d'une correction au niveau des moyens électroniques de restitution, l'oeil humain peut déceler une faible inclinaison de l'image sur un document restitué, du fait de la répétition du défaut sur toutes les lignes analysées.

Le détecteur 4 fournit pour chaque zone élémentaire a1....an, un signal représentatif de cette zone ; généralement, ce signal indique si la zone est blanche ou noire, de telle sorte qu'à la restitution, un point blanc ou un point noir correspondant à cette zone soit reproduit.

Il est souhaitable que la capacité d'analyse du détecteur 4 soit aussi bonne que possible et, à titre d'exemple pour préciser les idées, on souhaite que le système d'analyse soit capable de détecter des contrastes de l'ordre de 10 %.

Pour obtenir une telle performance, il faut éliminer ou compenser les causes d'erreurs dans l'analyse du contraste.

Une première cause réside dans le fait que la luminance des sources d'éclairage élémentaires e1,e2.... en n'est pas identique d'une source à l'autre ; il en résultera un éclairage différent des zones élémentaires a1.....an correspondantes.

Une autre cause est la variation de l'angle solide β (fig. 5) sous lequel l'élément détecteur est vu de chaque zone élémentaire.

La figure 5 illustre cette variation de l'angle solide qui est maximum au niveau de la zone élémentaire voisine du plan médiateur de l'élément 4, et minimum aux extrémités.

0045252

La figure 6 illustre schématiquement la variation de cet angle solide β porté en ordonnées en fonction de la position de la zone élémentaire considérée, portée en abscisses.

Dans le cas où un seul détecteur est utilisé, et où une optique 6 (fig.3) forme une image de la zone élémentaire sur une zone du détecteur, une erreur peut être introduite du fait que ce détecteur n'est pas totalement homogène et donne une réponse différente, selon la zone de sa surface qui est concernée.

Il est possible, par ailleurs, d'utiliser plusieurs détecteurs ; par exemple, un détecteur pourrait être associé à chaque zone élémentaire a1......an et donc à chaque élément d'éclairage e1.....én. Chaque couple d'élément d'éclairage et de détecteur associé peut donc avoir une réponse différente d'un autre couple, pour une même couleur de la zone élémentaire analysée sur le document D.

Pour remédier à ces inconvénients et améliorer la qualité et la précision de lecture, selon un autre aspect de l'invention, on prévoit des moyens d'égalisation N (fig. 9) des signaux fournis par les moyens de lecture L pour une même couleur de référence correspondant au fond moyen du document à analyser.

Pour cela, on effectue un étalonnage sur une surface de référence, par exemple, un bord de couleur déterminée du document, ou, de préférence, une plage de référence telle que 12 (fig. 1) prévue sur l'appareil équipé du dispositif de lecture, en bordure du document. En début de balayage, le dispositif de lecture est positionné de telle sorte que les zones élémentaires a1....an se trouvent toutes situées sur la plage 12 ; toutes ces zones élémentaires correspondent donc à une même couleur de référence pour laquelle des moyens de lecture L doivent donner, à leur sortie, un signal de même amplitude.

Les moyens d'égalisation sont agencés pour multiplier le signal fourni par les moyens de lecture pour chaque zone élémentaire par un coefficient de pondération, déterminé par approximations successives, de telle sorte que le signal donné pour chaque zone élémentaire soit sensiblement constant.

Le schéma synoptique d'ensemble des moyens d'égalisation est donné sur la figure 9.

Ces moyens N comprennent un circuit échantillonneur bloqueur 13 qui échantillonne le signal analogique provenant des moyens de lecture L, correspondant à une zone élémentaire a1....an de la plage de référence 12.

Le signal échantillonné, fourni à la sortie du circuit 13, est envoyé à l'entrée d'un circuit multiplieur analogique-digital 14. Le signal multiplié par un coefficient apparaît sur la sortie 14a du multiplieur. Ce signal multiplié est envoyé sur une entrée d'un comparateur 15 ; le signal multiplié est comparé à un signal de référence r envoyé sur l'autre entrée du comparateur 15.

La sortie du comparateur 15 est reliée à l'entrée de moyens d'approximation 16 qui permettent de déterminer, par approximations successives, un coefficient de multiplication tel que le signal multiplié par ce coefficient soit égal au signal de référence r ou à un rapport déterminé de ce signal de référence.

Les moyens d'approximations 16 commandent un accroissement du coefficient, dans le multiplieur 14, aussi longtemps que le comparateur 15 indique, à sa sortie, que le signal multiplié par le coefficient est inférieur à la référence r.

Lorsque l'égalité est obtenue, le coefficient utilisé dans le multiplieur 14 est satisfaisant et est mis en mémoire.

On détermine ainsi un coefficient d'égalisation pour chaque élément d'éclairage e1...en, ou pour chaque couple élément d'éclairage-détecteur, lorsqu'un détecteur est associé à un élément d'éclairage.

La figure 10 illustre d'une manière plus détaillée les moyens d'égalisation N.

La tension de référence r peut correspondre à une valeur dont on sait qu'elle est supérieure à la

## 0045252

valeur maximale des signaux analogiques fournis par les moyens de lecture L pour tous les éléments d'éclairage e1....en ; selon une autre possibilité, cette tension de référence r peut correspondre à une moyenne, obtenue par intégration, de tous les signaux analogiques fournis par les moyens de lecture L avant correction.

Les moyens d'approximation 16 branchés entre la sortie du comparateur 15 et le multiplieur 14 constituent, en quelque sorte, un circuit d'apprentissage permettant d'établir les coefficients d'égalisation appropriés pour chaque diode e1..... en. La sortie du comparateur 15 est également reliée en 17 à un circuit de détection vers lequel sont envoyés les signaux lors du balayage du document D à analyser, lorsque la phase d'apprentissage a été effectuée.

Les moyens d'approximation 16 peuvent comprendre un compteur 18, par exemple un compteur huit bits dont les huit sorties en parallèle sont reliées à une mémoire vive 19 (ou RAM). Cette mémoire 19 est reliée à un bus des adresses 20.

La sortie du comparateur 15 est, en outre, reliée à une entrée de validation 21 d'écriture dans la mémoire 19.

Les huit sorties du compteur sont également reliées au multiplieur 14.

Pour chaque signal échantillonné, correspondant à chaque diode électro-luminescente e1.....en, pendant la phase d'apprentissage, le compteur fournit sur sa sortie des valeurs de coefficient augmentant de 1 en 1 de 0 à 256 (huit bits). Lorsque la valeur du coefficient de multiplication appliqué au signal analogique entrant dans le multiplieur 14 est telle que le signal multiplié atteint la valeur de référence r, le comparateur 15 fournit sur sa sortie un signal de validation d'écriture de telle sorte que la valeur en question du coefficient, présente à la sortie du compteur 18, soit inscrite dans la mémoire 19 à l'adresse correspondant à la diode électro-luminescente en question.

La détermination du coefficient propre à la diode suivante est ensuite effectuée.

Selon une variante, les moyens d'approximation peuvent être agencés pour déterminer les coefficients par approximation par pesées successives 1/2, 1/4, 1/8, etc. Pour cela, par exemple, le compteur 18 serait remplacé par un registre à approximations successives.

Lorsque la phase d'apprentissage est terminée, le compteur 18 est arrêté et, lors de la lecture du document, le coefficient déterminé précédemment, et propre à chaque diode électro-luminescente e1.....en est introduit dans le multiplieur 14 pour fournir un signal corrigé sur la sortie de détection 17.

La figure 11 résume graphiquement la détermination du coefficient de multiplication pour chaque diode. La tension $v$ a été portée en ordonnées, tandis que le temps $t$ a été porté en abscisses. La tension de référence $r$ correspond à une parallèle à l'axe des abscisses.

Le signal "x", à la sortie du multiplieur 14, augmente sensiblement linéairement en fonction du temps puisque le coefficient de multiplication, fourni à la sortie du compteur 18, augmente linéairement ; le signal "x" est représenté par le segment incliné 22. Le point d'intersection $i$ du segment 22 et du seuil $r$ correspond au moment où la valeur du coefficient de multiplication, présent à la sortie du compteur 18, a atteint la valeur appropriée qui est stockée dans la mémoire 19.

Avant égalisation, le signal analogique obtenu à la sortie des moyens de lecture L, pour la plage de référence 12, lors d'un balayage de toutes les plages élémentaires a1..... an a une forme du type de celle représentée sur la partie gauche de la figure 12. Après égalisation, le signal corrigé devient une parallèle ou sensiblement une parallèle à l'axe des abscisses, ce qui correspond bien à la plage de référence 12 dont la couleur est uniforme.

Lors du balayage du document D, les coefficients d'égalisation appropriés qui viennent d'être déterminés, sont appliqués aux signaux fournis par chaque diode pour la plage correspondante du document.

14

La détermination des coefficients de multiplication peut être réajustée au début du balayage de chaque bande de largeur $\underline{h}$.

Pour améliorer encore la qualité et la précision de lecture en atténuant un effet parasite lié au phénomène de diaphonie précisé ci-après, les moyens d'égalisation sont agencés pour déterminer le coefficient de pondération d'une diode élémentaire $e_k$ en tenant compte de l'influence des diodes précédentes. Pratiquement, il est suffisant de tenir compte de l'influence de la diode immédiatement précédente $e_{k-1}$.

La diaphonie peut être définie par le rapport : $\dfrac{\text{Bruit d'interférence}}{\text{Signal sans bruit}}$ , au niveau d'une diode $e_k$.

En utilisation normale du dispositif de lecture, les diodes successives .. $e_{k-2}$, $e_{k-1}$, $e_k$... sont allumées les unes après les autres avec des intervalles de temps réduits entre l'extinction de la précédente et l'allumage de la diode immédiatement suivante.

Cependant, lors de la détermination du coefficient de pondération propre à chaque diode (avant de commencer à utiliser réellement le dispositif de lecture), le calcul du coefficient de pondération ou de multiplication pour chaque diode peut nécessiter un temps supérieur à l'intervalle séparant, en utilisation normale, l'extinction de la diode précédente de l'allumage de la diode immédiatement suivante.

Dans ces conditions, on prévoit une séquence d'allumage spéciale des diodes pour l'opération de détermination des coefficients de pondération.

Une première possibilité consiste à commander l'allumage des diodes les unes après les autres, avec des intervalles de temps (entre l'extinction de la diode précédente et l'allumage de la diode immédiatement suivante) supérieurs à ceux de l'utilisation normale, et suffisamment longs pour permettre la détermination du coefficient.

Selon cette première possibilité, lors de la détermination du coefficient $C_k$, propre à la diode $e_k$, on ne tiendra pratiquement pas compte de l'interférence de la diode précédente $e_{k-1}$, éteinte depuis un intervalle de temps relativement long.

Si $X_k$ est le signal fourni, lors de cette détermination, par $e_k$, on peut écrire :

$$C_k \ X_k = 1 \qquad \text{d'où} \qquad C_k = \frac{1}{X_k}.$$

Les coefficients de pondération sont en effet calculés pour maintenir égal à une constante le produit du signal par le coefficient.

En utilisation normale, le signal $y_k$, fourni par la diode $e_k$, dépendra aussi du signal de la diode précédente $e_{k-1}$, qui a été éteinte peu de temps avant.

On peut écrire :

$$y_k = C_k \ (x_k + \alpha \ x_{k-1}) = \frac{1}{X_k} \ (x_k + \alpha x_{k-1})$$

Le signal sans bruit est $\dfrac{x_k}{x_k}$

Le bruit d'interférence est $\dfrac{\alpha \ x_{k-1}}{X_k}$

Le coefficient $\alpha$, inférieur à 1, traduit l'influence de la diode $e_{k-1}$ précédente.

La diaphonie $D_1$, selon cette première possibilité de détermination de $C_k$, sera :

$$D_1 = \frac{\alpha \ x_{k-1}}{x_k}$$

Une deuxième possibilité de détermination du coefficient $C_k$ correspond à une solution avantageuse de l'invention permettant de tenir compte de l'influence des diodes précédentes.

Selon cette solution, on agence les moyens d'égalisation de manière telle que pour calculer le coefficient $C_k$ on allume successivement les diodes $e_{k-1}$, $e_k$ à vitesse nominale, c'est-à-dire en laissant entre l'extinction de $e_{k-1}$ et l'allumage de $e_k$ un intervalle

16

de temps égal ou sensiblement égal à celui qui existe lors de l'utilisation normale du dispositif de lecture.

Le coefficient $C_k$ est déterminé ensuite, toutes les diodes restant éteintes ; puis, pour la diode suivante $e_{k+1}$, on allume successivement $e_k$ puis $e_{k+1}$, à vitesse nominale, pour déterminer $C_{k+1}$ et ainsi de suite.

On pourrait allumer successivement deux, trois (ou davantage) diodes précédentes à vitesse nominale, au moment de la détermination de $C_k$ ; par exemple on pourrait allumer $e_{k-3}$, $e_{k-2}$, $e_{k-1}$, $e_k$ successivement à vitesse nominale pour déterminer $C_k$, pour améliorer encore la correction.

Pratiquement, il suffit de tenir compte de l'interférence produite par la diode immédiatement précédente pour obtenir une amélioration sensible.

Dans ce cas, lors de la détermination du coefficient $C_k$ on peut écrire :

$$C_k (X_k + \alpha X_{k-1}) = 1.$$

En utilisation normale, le signal $y_k$ fourni par $e_k$ sera :

$$y_k = C_k (x_k + \alpha x_{k-1})$$

$$y_k = \frac{1}{X_k + \alpha X_{k-1}} (x_k + \alpha x_{k-1})$$

Le signal sans bruit est $\dfrac{x_k}{X_k}$

Le bruit d'interférence est $y_k - \dfrac{x_k}{X_k}$

La diaphonie $D_2$ est :

$$D_2 = \frac{y_k - \dfrac{x_k}{X_k}}{\dfrac{x_k}{X_k}} = \frac{y_k \; X_k}{x_k} - 1.$$

$$D_2 = \frac{X_k}{X_k + \alpha X_{k-1}} \left(1 + \alpha \frac{x_{k-1}}{x_k}\right) - 1$$

$$D_2 = \frac{1}{X_k + \alpha X_{k-1}} \left(X_k + \frac{\alpha X_k x_{k-1}}{x_k} - X_k - \alpha X_{k-1}\right)$$

$$D_2 = \alpha \frac{x_{k-1}}{x_k} \left(\frac{X_k - \frac{x_k}{x_{k-1}} X_{k-1}}{X_k + \alpha X_{k-1}}\right).$$

On peut considérer que $X_k$ est peu différent de $X_{k-1}$ du fait, qu'en pratique,

$$0,8 < \frac{X_k}{X_{k-1}} < 1,2.$$

On peut alors écrire :

$$D_2 \not\equiv \frac{\alpha x_{k-1}}{x_k} \left(\frac{1 - \frac{x_k}{x_{k-1}}}{1 + \alpha}\right).$$

Or, on a montré précédemment que :

$$\alpha \frac{x_{k-1}}{x_k} = D_1.$$

On en déduit :

$$D_2 \not\equiv D_1 \left(\frac{1 - \frac{\alpha}{D_1}}{1 + \alpha}\right) = \frac{D_1 - \alpha}{1 + \alpha}.$$

Comme $\alpha$ est toujours positif, $D_2$ sera toujours plus petit que $D_1$.

On voit, ainsi, que la solution avantageuse proposée pour la détermination des coefficients $C_k$ permet de diminuer la diaphonie.

Les explications précédentes ont été fournies surtout au sujet d'un dispositif de lecture. Il est clair cependant que les moyens prévus, notamment les moyens d'égalisation, peuvent être utilisés pour la restitution, moyennant quelques adaptations. Ces moyens d'égalisation permettent ainsi, par exemple, lors de la restitution, à l'aide d'un papier photosensible et de diodes électroluminescentes,d'égaliser les nuances restituées pour une même information. Chaque diode électro-luminescente correspond à un point ; l'éclairage d'une diode provoque l'inscription d'un point, noir par exemple, sur le papier photosensible.

REVENDICATIONS

1. Dispositif de lecture ou de restitution d'un document, notamment d'un texte ou d'un dessin, en particulier pour appareil de télécopie, comprenant des moyens d'éclairage (E) d'une région du document, des moyens optiques (1) propres à former sur le document à lire (D) une image des moyens d'éclairage, et des moyens de lecture (L) de la région ainsi éclairée, des moyens de commande (3) en séquence étant en outre prévus pour les moyens d'éclairage de telle sorte que des zones élémentaires ($a_k$) soient éclairées successivement, les moyens de lecture (L) comprenant un seul élément détecteur (4) situé du même côté du document que les moyens d'éclairage (E) caractérisé par le fait que ce dispositif de lecture ou de restitution peut, d'une manière connue en elle-même, être déplacé suivant une direction transversale (T) par rapport à la direction des moyens d'éclairage (E) pour assurer le balayage d'une bande du document (D), ce document étant déplacé ensuite suivant une direction parallèle à celle des moyens d'éclairage, que les susdits moyens d'éclairage (E) sont formés par une pluralité de sources lumineuses élémentaires (e1.....en) alignées, les moyens de commande en séquence étant agencés pour alimenter successivement chaque source lumineuse élémentaire, et que l'élément détecteur (4) est monté sur le dispositif de lecture de manière à se déplacer avec lui.

2. Dispositif selon la revendication 1, caractérisé par le fait que les moyens optiques sont formés par un objectif (1) dont l'axe optique est parallèle au plan du document (D), cet objectif étant monté sur un support (8) propre à être déplacé suivant la direction transversale (T), ce support étant muni d'un miroir (11) de renvoi, situé en aval de l'objectif suivant le sens de propagation de la lumière, l'élément détecteur (4) étant prévu, au-delà du miroir (11), vers l'extrémité du support (8) la plus voisine du document (D).

3. Dispositif selon la revendication 1 ou 2, caractérisé par le fait que les moyens d'éclairage sont formés par une barrette de 16 diodes électroluminescentes.

4. Dispositif selon l'une quelconque des revendications précédentes, caractérisé par le fait que les moyens optiques (1) ont un grandissement égal à 2.

5. Dispositif selon l'une quelconque des revendications précédentes, caractérisé par le fait que l'élément détecteur (4) est placé de manière à recevoir directement la lumière renvoyée par la zone élémentaire $(a_k)$ du document.

6. Dispositif selon l'une quelconque des revendications 1 à 3, caractérisé par le fait qu'une optique (6) est prévue pour collecter le flux et former une image des zones élémentaires $(a_k)$ sur le détecteur (4), lequel est disposé hors du faisceau réfléchi par le document (D) et hors du faisceau (7) qui émerge des moyens optiques (1).

7. Dispositif selon l'une quelconque des revendications précédentes, caractérisé par le fait que la pluralité de sources lumineuses élémentaires (e1....en) alignées, forme un segment incliné par rapport à la direction perpendiculaire à celle (T) de balayage, dans un sens et selon un angle tel que l'image analysée soit redressée.

8. Dispositif de lecture ou de restitution d'un document, notamment d'un texte ou d'un dessin, en particulier pour appareil de télécopie, comprenant des moyens de lecture ou de restitution d'une région du document, notamment selon l'une quelconque des revendications précédentes, caractérisé par le fait qu'il comporte des moyens d'égalisation (N) des signaux fournis par les moyens de lecture (L) ou de restitution, pour une même couleur de référence, ces moyens d'égalisation comprenant des moyens multiplieurs (14) du signal fourni par les moyens de lecture (L) ou de restitution, des moyens comparateurs (15) entre le signal ainsi multiplié et un signal de référence (r) et des moyens d'approximation (16) permettant de déterminer, par approximations successives, un coefficient de multiplication du signal tel que, lorsque les moyens de lecture (L) ou de restitution lisent ou restituent la couleur de référence, le signal multiplié par le coefficient approprié corresponde au signal de référence.

9. Dispositif selon la revendication 7, caractérisé par le fait que les moyens d'approximation (16) comprennent un compteur (18) propre à fournir successivement des valeurs croissantes du coefficient de multiplication à un multiplieur analogique digital (14) et une mémoire vive (19) dans laquelle est inscrit le coefficient approprié.

10. Dispositif selon la revendication 8 ou 9, caractérisé par le fait que les moyens d'égalisation (N) sont agencés de telle sorte que, lors de la détermination du coefficient de multiplication ($C_k$) pour la diode ($e_k$), soient éclairés successivement à vitesse nominale, au moins une diode précédente ($e_{k-1}$) et la diode ($e_k$).

0045252

Fig.4.

Fig.2.

Fig.3.

Fig.1.

Fig.5.

Fig.12.

Fig.6.

tension

0045252

2/2

Fig.7.

Fig.8.

Fig.9.

Fig.11.

Fig.10.